# EUROPEAN PATENT APPLICATION

(11) **EP 2 193 755 A1**
(43) Date of publication of application: **09.06.2010**
(21) Application number: 08425780.7
(22) Date of filing: 05.12.2008
(51) Int. Cl.: A61C 1/08

(54) **Device for illumination of dental handpieces**

(71) Applicant: Tekne Dental SRL, 50041 Calenzano (FI) (IT)
(72) Inventor: Ravalli, Roberto, 50025 Montespertoli (FI) (IT)
(74) Representative: Turini, Laura

(57) **Abstract**

The present invention concerns a medical device, in particular for dental use, comprising:
- A body **(1)** manoeuvrable by a user and comprising a working head **(2)** configured to hold a tool **(4)** which can be switched from a steady condition to a condition of rotary motion;
- Means to run the tool **(5, 6; 205, 206);**
- Means of lighting **(8, 9; 208, 209)** comprising in

combination at least a rod of optical fibres **(9; 209)** contained inside the body with at least one light source **(8, 208)** located at least in the vicinity of the rod of optical fibres, said light source comprising at least one LED **(10; 210).**
According to the present invention, such LED shows a front surface **(17; 217)** directed during use towards the rod of optical fibres substantially flat so as to permit to move the semiconductor's junction closer to the inlet of the rod and direct a greater quantity of light inside it.

## Description

### Technical Field

The present invention concerns the technical field of medical instruments. Particularly, it relates to an innovative lighting device for dental handpieces.

### Short notes on Prior Art

Instruments for dental use which allow to carry out a wide range of dental medical treatments have been known for long time. For instance commonly used dental handpieces are the high-speed turbine and the low-speed contra-angle, suitable to carry out removal of decayed parts of tooth and/or tooth restoration.

Such instrument generally comprises a body manoeuvrable by a user and comprising a working head configured to accommodate a tool which can be set in motion. Convenient activation systems allow to set the tool into its operating rotary motion. In the common case of the dental handpiece, the tool is represented by a small bur (various types of different sizes and hardness are available) set in motion by a motor shaft or a by a simple turbine.

In this second case, the turbine is activated by compressed air which is blown along a special conduit inside the body of the medical handpiece itself. Air sets the turbine, which is mechanically coupled to the bur, into rotation thus spinning at high speed.

In the case of contra-angle instead, rotation of the bur is directly obtained by connection to the motor shaft which is conveniently coupled to, and set in motion, by a pneumatic or electric micromotor.

Either the common described turbine or other similar instruments, can comprise means of lighting to allow to emit a light beam directly from the working head, thus adequately illuminating the bur and the corresponding preparation site.

According to prior art, in order to get high luminous power, commonly used lighting means comprise a bundle (or a solid rod) of optical fibres contained inside the instrument's body and emerging at a predetermined opening just below the working head and close to the bur. Optical fibres are arranged in combination with a light source located in the vicinity of the bundle start, which is located on the side opposite the outlet one below the head. In this way, optical fibres conduct the light emitted by the source all along their length and thus illuminating the preparation site.

Usually, the light source is commonly implemented by a high-power electric lamp. However, in this case, there are many drawbacks. As a matter of fact, as well known, such high-power lamps contain noble gases (e.g. Xenon) which burn out quickly and therefore give the lamp a very short lifetime (about one hundred hours). Besides, just because of the desired high light intensity, lamps are subject to excessive overheating and so adequate cooling systems are necessary. It is therefore obvious, being their lifetimes extremely short, how onerous it is to replace them frequently. Furthermore, the internal filament which has got a particular direction, conceptually similar to a oriented segment, produces a light cone whose section is substantially elliptic. As a consequence, the light entering the rod's section, and conducted and projected in output, correspondingly displays an elliptic light cone with two extreme points (towards the ellipse focuses) having greater power and the other zones with reduced intensity. The result is therefore an output emission which is not much uniform.

Then it was attempted to solve the technical problem by replacing the lamp with a LED, namely with a "Light-Emitting Diode". The latter is a semiconductor element which emits visible radiation when crossed by an electric current. Light emission is due to electrons crossing from cathode to anode and colour of the luminous emission (which can be red, green, blue, amber, white etc..) depends on the type of used material. Contrary to ordinary incandescence lamps, LEDs do not contain any filament or noble gas and this grant them a much longer lifetime and higher reliability.

Nevertheless, in this case there is a big drawback too. Light power is high mainly in the immediate vicinity of the semiconductor's junction and light emission is spread along a cone of wide aperture wherein there are also some side lobes of light. In this way, if the LED is put close to the inlet of the rod of optical fibres, only a minimum part of light goes into the inlet section of the rod whereas most of it gets lost sideways. Therefore light which enters optical fibres has got limited power and, anyway, much lower than that present in the vicinity of the semiconductor's junction.

In the last analysis, the light quantity transmitted to output by the optical fibres is generally low and insufficient for the object.

So, it was attempted to solve the technical problem by assembling one or more LEDs directly on the working head, that is totally eliminating the bundle of optical fibres. In this way, all the light cone is directly radiated to the preparation site, thus granting a sufficient and adequate illumination. However, this solution has got some drawbacks, too. The LED located on the head also means the availability of power supply exactly in the vicinity of it, with consequent remarkable structural complication. Besides, every time it is necessary to carry out disinfection of the instrument, the LED's visible surface and electrical connections may suffer serious damages due to the disinfectant agents. This means a remarkable structural complication of the instrument in order to seal and protect, even if only partially, the LED and the corresponding electrical contacts. Alternatively, should protection not prove adequate, it would then be necessary to carry out a frequent and onerous replacement of the LED and/or its electrical connections.

### Short description of the invention

It is therefore object of the present invention to produce a new medical device which allows to overcome all the drawbacks faced with prior art.

Particularly, it is object of the present invention to create a dental handpiece with a constructively simple and effective light source, permitting to get high luminous power and to reduce maintenance times to minimum.

Particularly, it is also object of the present invention to create a light source which proves to be effective to focus and direct almost the whole of emitted light inside the inlet section of a rod of optical fibres.

It is a further object of the present invention to produce a new dental handpiece whose illumination system can be eventually, but not necessarily, disconnected from it at the time of disinfection and/or sterilization, or integrated in the handpiece itself.

These and other objects are achieved by the present dental handpiece, in particular for dental use, comprising:
- A body (1) manoeuvrable by a user and comprising a working head (2) configured to hold a tool (4) which can be switched from a steady condition to a condition of rotary motion;
- Means to run the tool (**5, 6; 205, 206);**
- Means of lighting **(8, 9; 208, 209)** comprising in combination at least a rod of optical fibres **(9; 209)** contained inside the body with at least one light source **(8, 208)** located at least in the vicinity of the rod of optical fibres, said light source comprising at least one LED **(10; 210);**
and characterized by the fact that said LED shows a front surface **(17; 217)** directed during use towards said rod of optical fibres, substantially flat so as to permit to move the semiconductor's junction closer to the inlet of said rod and to direct a greater quantity of light inside the rod.

It may thus be clearly inferred what remarkable advantage such a realization or modification of the LED as described can give. As a matter of fact, such realization permits to move the rod of optical fibres to the point where luminous power is maximum, i.e. on the semiconductor's junction, thus permitting to direct almost the whole of emitted light inside the optical fibres. Besides, not only does the removal of the front round portion according to the new realization reduce the conventional height of the LED but, contemporarily, produces a regular surface which permits to totally eliminate side lobes and therefore to remarkably reduce side losses.

Advantageously the flat surface is realized by means of levelling and polishing of the front portion. In particular such levelling and polishing reduce total height of the LED and allows, as said, to totally eliminate side losses of light. It is therefore obvious the two-fold advantageous effect of the present invention.

According to one possible construction solution, the body **(1)** comprises an handpiece with a turbine activated by compressed air and a rapid coupling **(13),** said rapid coupling being detachably connectable to said turbine handpiece.

In this case, then, the LED is fit to the apex **(14)** of said rapid coupling **(13),** said rapid coupling having electrical connections suited to be connected to a power supply for the LED and pneumatic connections to activate the turbine handpiece.

Advantageously such rapid coupling can be inserted from the base **(7)** of said turbine handpiece into a cylindrical sleeve or similar in such a way that said front surface **(17)** of said LED appears during use substantially in contact with the rod of optical fibres.

A second construction solution provides (for?)a body (1) which comprises a contra-angle handpiece detachably connectable to an electric or pneumatic micromotor **(213),** said micromotor being coupled to the base of said contra-angle via a motor shaft **(205).**

In this case the LED **(210)** is arranged on the apex (top) of said electric or pneumatic micromotor in such a way that said front surface of said LED appears during use substantially in contact with the rod of optical fibres, said micromotor having connections suited to be attached to a pneumatic and electric supply source for the LED and the micromotor itself.

Furthermore, it is here described a method for producing a luminous beam emitted by a medical device, in particular for dental use, said device comprising a body **(1)** manoeuvrable by a user and comprising a working head **(2)** configured to hold a tool **(4)** which can be switched from a condition of rotary motion and a steady condition, means to run the tool **(5, 6; 205, 206)** and means of lighting **(8, 9; 208, 209)** comprising at least a solid rod of optical fibres **(9; 209)** conveniently shaped and bent inside the body and comprising the operations:
- Configuration of a light source, said light source comprising a LED **(10; 210);**
- Assembly of said light source inside said body so that during use said LED appears directed towards said rod of optical fibres **(9; 209)**
and characterized by the fact that said operation of configuration of the light source comprises at least the operation of levelling of the LED front surface, directed during use towards said rod, so that said front surface becomes substantially flat.

Advantageously, the flattening operation is carried out by means of milling and/or turning, such as to lower the total height of the LED and move the semiconductor's junction closer to the front surface.

The method also comprises the additional polishing operation of the flattened front surface so as to make it transparent to light.

Advantageously, the polishing operation is carried out by rubbing with abrasive pastes or similar and/or by lapping.

### Brief description of the drawings

Further features and the advantages of the medical device according to the invention, will turn out clear with the following realization, given as example and not restrictive, which is described by its related drawings:
- Fig.1 schematically shows a dental handpiece.
- Fig.2 schematically shows a first preferred embodiment of the invention wherein a dental handpiece with a turbine (turbine handpiece) is used in combination with a rapid coupling.
- Fig.3 schematically shows the insertion of the rapid coupling into the turbine handpiece and its connection to the air supply hose.
- Fig.4 schematically shows a comparison between a rapid coupling with a normal LED and a LED modified according the invention.
- Fig.5 schematically shows the light cone emitted by a modified LED;
- Fig.6 schematically shows the light cone emitted by a standard LED. The side lobes of light are also shown.
- Fig.7 and Fig.8 schematically show a second preferred embodiment of the invention, wherein the LED is integrated in an electric or pneumatic micromotor.

### Description of some preferred embodiments

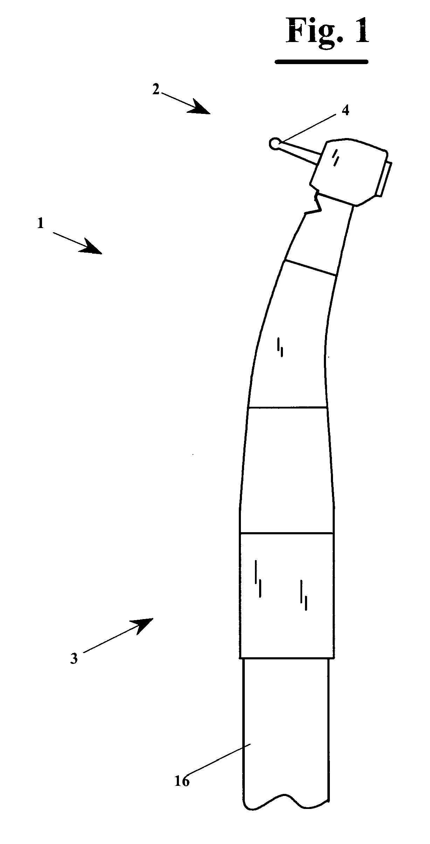

Fig.1 schematically shows an ordinary dental handpiece, such as a turbine or a contra-angle handpiece, commonly used for dental treatments and provided with illumination for the operating site.

Without limitation for the present invention, the handpiece shown as example in Fig.1 is made up of a body **1** comprising an operating head **2** and a rear portion **3** usually comprising a rapid coupling or an electric or pneumatic micromotor (better described afterwards). As well known from the state of art, the operating head is equipped with a chuck and a push-button device **(6; 206)** which allow to detachably accommodate the tool **4** (e.g. a bur). It is therefore possible to rapidly insert or release the tool every time it is necessary. Convenient rotary means **(5; 205)** then permits its motion.

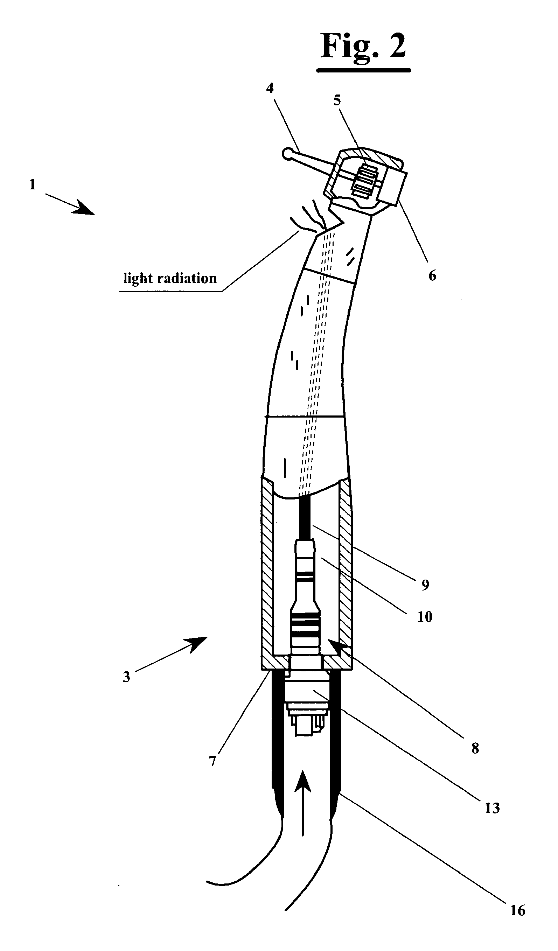

To go into details, Fig.2 therefore shows a first preferred embodiment of the invention, namely a handpiece with an air-activated turbine and provided with illumination for the operating preparation site. According to such structural solution, turbine **5** is therefore assembled in the head of the body and functionally coupled to the tool **4.** A mechanical connection **6** fulfils the function to support the turbine and allow a fast removal of the tool. In order to send compressed air to the turbine, a simple connection to a air source is usually carried out via a simple supply hose **16** directly connected to the base **7** of the body. In this case, body **1** is made hollow to permit passage of air. Compressed air therefore goes up the body and activates turbine, thus spinning the bur.

Still with reference to Fig.2, means of lighting **(8, 9)** then permit to illuminate the user's operating site. These means comprise a rod of optical fibres **9** contained in the hollow body **1** of the handpiece, which ends and comes out in the vicinity of the operating head. Optical fibres are configured in combination with a light source **8** comprising a rapid coupling **13** interposed between the handpiece and the supply hose **16** and whereon a LED **10** is assembled. The LED is arranged on the rapid coupling in such a way that its front surface **(17)** appears during use substantially in contact with one free side of the rod of optical fibres. The light emitted by the LED then gets captured by the optical fibres and sent, all long their length, towards the small opening wherefrom it is radiated to illuminate the operating site.

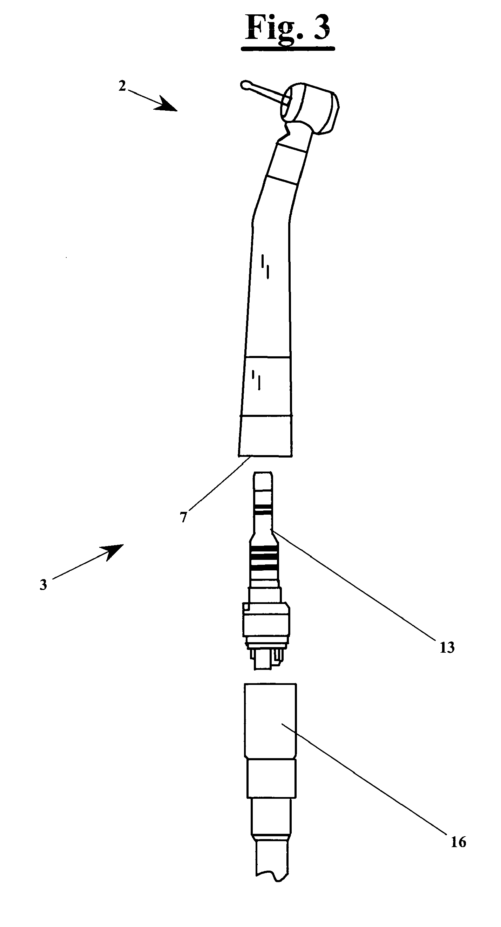

In particular Fig.3 shows an assembly detail where the rapid coupling **13** is inserted inside the handpiece from its base **7.** The opposite part of the coupling is connected to the hose **16** for the supply of compressed air. Naturally the coupling comprises convenient holes for the passage of air or other media lines but here not shown just for the sake of description simplicity. According to such solution, therefore, the supply hose and coupling components can be eventually detached from the handpiece, as well known from current technique.

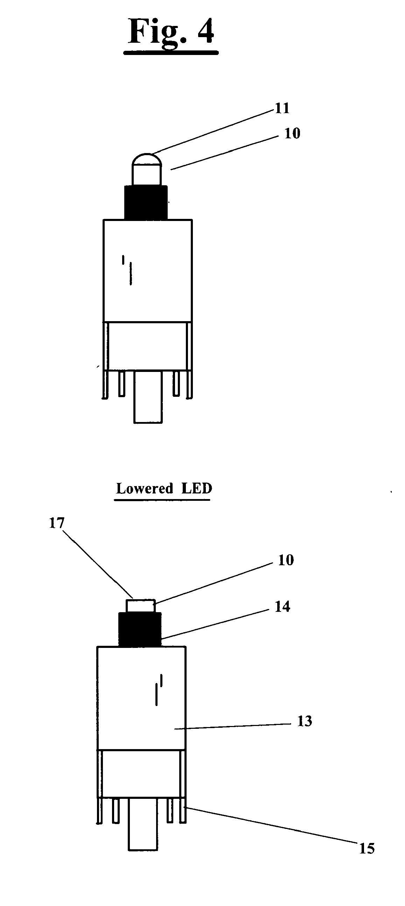

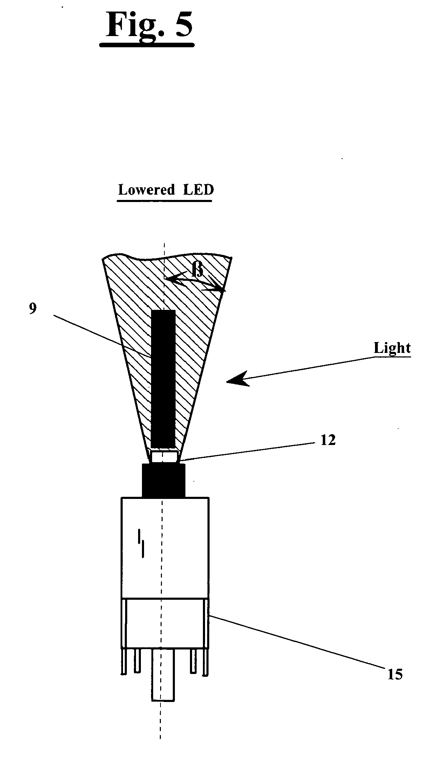

As described in greater detail on Fig.4 and 5, the coupling comprises a front portion **14** wherein a LED **10** is arranged on its apex. On the rear portion **15** there are electric contacts to supply the LED and pneumatic connections for air and other lines.

According to the invention, as shown on Fig.4, the LED **10,** before being assembled on the rapid coupling, undergoes a predetermined work process which permits to modify its front round surface **11** to a new substantially flat surface **17.** In particular the process comprises the operations of levelling and polishing, better described afterwards.

In this way, a two-fold advantage is achieved, as described below. The height reduction of the LED, together with a good polishing of the front surface **17,** allows to capture a high quantity of light as a consequence of the fact that optical fibres can be positioned much closer to the semiconductor's junction (area where light power is remarkably higher). Polishing then, makes the diode itself much more transparent permitting a much more efficient light transmission. Finally, as the front surface **17** is substantially flat, side lobes and losses, inevitably present on standard commercial LEDs, are remarkably reduced.

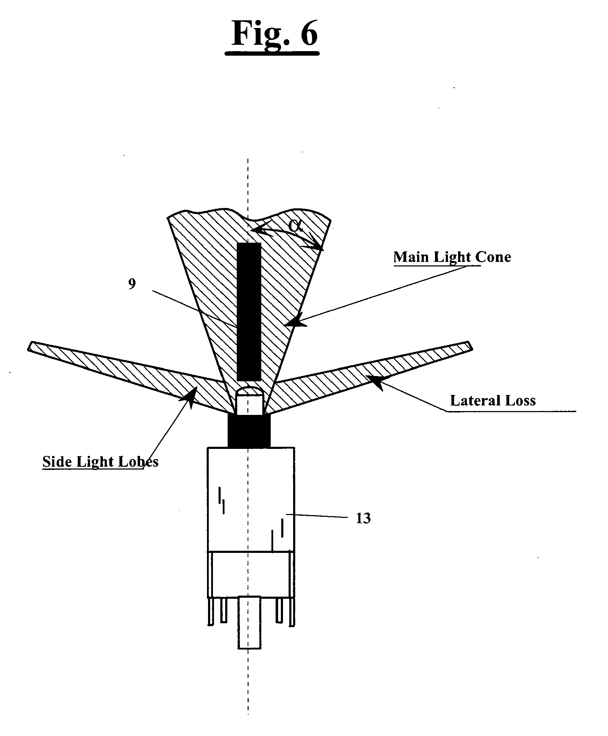

Particularly, as described in detail on Fig.6, the light cone emitted by an ordinary LED, though with a radiation angle already low, has got an aperture too wide and with remarkable side losses. The same drawing, in fact, shows the side losses via the side light lobes. It is likewise shown the impossibility for the optical fibres **9** to capture all light but, rather, only a minimum part of it.

On the contrary, as shown on Fig.5, a LED machined and modified in the described way has got a light cone with a radiation angle β approximately unchanged but now the two side light lobes have disappeared and, thanks to the reduced height of the LED, the light quantity which can be directed to the optical fibres is now higher, as it is possible to move close to the semiconductor's junction **12,** i.e. the real light source. In this way, captured light power is higher. It is therefore obvious that the employment of a LED geometrically configured as described, permits to get either a remarkable reduction of side losses or a higher light power.

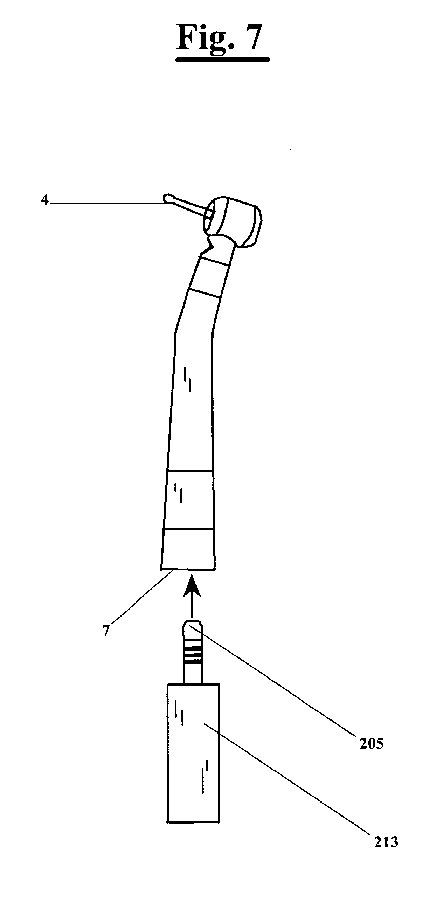

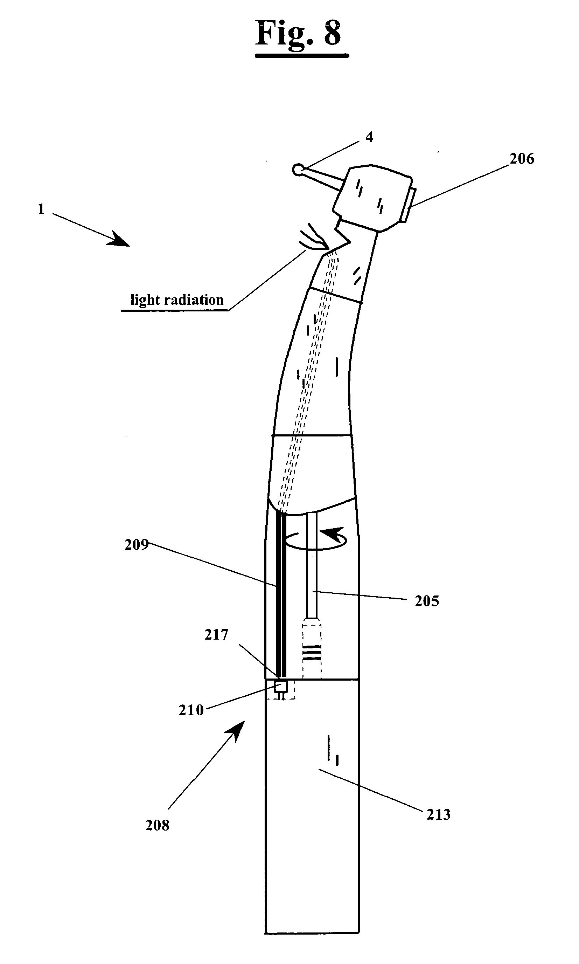

A second preferred embodiment of the invention (shown on Fig. 7 and 8) provides the use of the LED **210** as a direct light source **208** integrated in an electric or pneumatic micromotor **213** coupled to the handpiece. To this end, such micromotor is provided with electric contacts for the power supply of the LED. Micromotor then can be connected to the base **7** of the handpiece, as clearly shown on Fig.7. Likewise, the LED gets substantially in contact with the rod of optical fibres which is present on the contra-angle handpiece (to whom is coupled via a motor shaft). Fig.8 schematically shows the connection of the micromotor to the handpiece, whose motor shaft transmits the rotary motion to the operating head and finally to the bur. The micromotor itself is also detachable from the contra-angle handpiece. The motor shaft has not been shown in detail because it is a commonly known part and it is not object of the present invention.

According to this solution, then, as previously described, the LED is similarly arranged with its front flat surface **217** substantially in contact with the optical fibres. To avoid interference with the axial motor shaft, this time the LED is assembled on the external ring of the micromotor and, correspondingly, the rod of optical fibres **209** present on the handpiece appears moved sideways.

Naturally, to the end of the present invention it is quite unimportant whether the light source located in the vicinity of the optical fibres **(9, 209)** is a detachable part or an integral part of the handpiece itself. On this point, for instance, a convenient location of the optical fibres, still in combination with the LED, can be provided in the vicinity of the tool **4,** or in any other area conveniently suited to the purpose. Likewise, the front flat surface of the LED is assembled substantially in contact with the optical fibres.

It is obvious that the eventual employment of a LED which has been directly manufactured with such geometrical specifications as described above, and therefore not subsequently modified, still falls within the inventive scope of the present invention.

After describing the structure of the device, to complete the subject, it is here briefly described the manufacturing process carried out to modify the front part of the LED. In particular the realization of the flat surface first comprises an operation of levelling or facing to carry out the necessary removal of material. In this case, a convenient milling cycle can be suitable for the purpose. The surface made flat and lowered is subsequently polished by means of a convenient lapping and/or rubbing cycle with abrasive pastes or similar so as to make it transparent to light.

An eventual turning of its external diameter makes it easier to assemble the LED into particularly narrow housings. Furthermore, during all process, convenient stratagems allow to avoid excessive vibrations and consequent breakdown of the LED.

It is now evident that all set objects have been fulfilled. As a matter of fact, it is obvious that the employment of a flat-surfaced LED, assembled opposite to a rod of optical fibres, permits to capture a higher quantity of light. Additionally, light emitted by the modified LED offers a further advantage with respect to an ordinary lamp. Contrarily to the latter, in fact, the light source (semiconductor's junction) is circular and therefore projects a light cone perfectly circular, thus allowing to obtain a much more regular and uniform light as output to the operating site.

Besides, in case the LED is used as a detachable part far from the operating head, it will be possible to carry out cycles of sterilization or disinfection without any particular precaution for LED and its electric contacts.

The present disclosure of the exemplary embodiments described here shows the conceptual principle of the invention so that others, using the known technique, will be able to modify and/or adapt this specific embodiment to various applications without any further research and without escaping the inventive concept, and, therefore, it is implied that such adaptations and modifications will be considered equivalent to the embodiment. Means and materials to achieve the described functions can be of different types but this will not escape the scope of the invention. Used words and terminology have got a purely descriptive purpose and therefore not restrictive.

## Claims

1. Medical device, in particular for dental use, comprising:
- A body **(1)** manoeuvrable by a user and comprising a working head **(2)** configured to hold a tool **(4)** which can be switched from a steady condition to a condition of rotary motion;
- Means to run the tool **(5, 6; 205, 206);**
- Means of lighting **(8, 9; 208, 209)** comprising in combination at least a rod of optical fibres **(9; 209)** contained inside the body with at least one light source **(8, 208)** located at least in the vicinity of the rod of optical fibres, said light source comprising at least one LED **(10; 210);**
**and characterized by the fact** that said LED shows a front surface **(17; 217)** directed during use towards said rod of optical fibres, substantially flat so as to permit to move the semiconductor's junction closer to the inlet of said rod and to direct a greater quantity of light inside the rod.

2. Medical device, in particular for dental use, according to claim 1, wherein said flat surface is realized with at least a levelling and polishing of its front portion, said levelling and polishing lowering the total height of the LED such as to allow to further reduce and/or eliminate side losses of emitted light.

3. Medical device, in particular for dental use, according to claims 1 and 2, wherein said body **(1)** comprises a handpiece with an air-activated turbine and a rapid coupling **(13),** said rapid coupling being detachably connectable to said turbine handpiece.

4. Medical device, in particular for dental use, according to claims from 1 to 3, wherein said LED is arranged to the apex **(14)** of said rapid coupling **(13),** said rapid coupling having electrical connections suited to be connected to a power supply for the LED and pneumatic connections to activate the turbine handpiece.

5. Medical device, in particular for dental use, according to claims 3 and 4, wherein said rapid coupling can be inserted from the base **(7)** of said turbine handpiece into a cylindrical sleeve or similar in such a way that said front surface **(17)** of said LED appears during use substantially in contact with the rod of optical fibres.

6. Medical device, in particular for dental use, according to claims 1 and 2, wherein said body **(1)** comprises a contra-angle handpiece detachably connectable to an electric or pneumatic micromotor **(213),** said micromotor being coupled to the base of said contra-angle via a motor shaft **(205).**

7. Medical device, in particular for dental use, according to one or more previous claims, wherein said LED **(210)** is arranged on the apex of said electric or pneumatic micromotor in such a way that said front surface of said LED appears during use substantially in contact with the rod of optical fibres, said micromotor having connections suited to be attached to a pneumatic and electric power supply for the LED and the micromotor itself.

8. Method for producing a luminous beam emitted by a medical device, in particular for dental use, said device comprising a body **(1)** manoeuvrable by a user and comprising a working head **(2)** configured to accommodate a tool **(4)** which can be switched from a steady condition to a condition of rotary motion, means to run the tool **(5, 6; 205, 206)** and means of lighting **(8, 9; 208, 209)** comprising at least a solid rod of optical fibres **(9; 209)** conveniently shaped and bent inside the body and comprising the operations of:
- Configuration of a light source, said light source comprising a LED **(10; 210);**
- Assembly of said light source inside said body so that during use said LED appears directed towards said rod of optical fibres **(9; 209);**
**and characterized by the fact** that said operation of configuration of the light source comprises at least the operation of levelling of the LED's front surface, directed during use towards said rod, so that said front surface becomes substantially flat.

9. Method for creating a luminous beam emitted by a medical device, in particular for dental use, according to claim 8, wherein said levelling operation is carried out by means of milling and/or turning, such as to lower the total height of the LED and move the semiconductor's junction closer to the front surface.

10. Method for creating a luminous beam emitted by a medical device, in particular for dental use, according to claim 9, wherein an additional polishing operation is made on the flattened front surface so as to make it transparent to light.

11. Method for creating a luminous beam emitted by a medical device, in particular for dental use, according to claim 10, wherein said polishing operation is carried out by rubbing with abrasive pastes or similar and/or by lapping.
